# EUROPEAN PATENT SPECIFICATION

(11) **EP 2 434 693 B1**
(45) Date of publication and mention of the grant of the patent: **03.10.2018**
(21) Application number: 10777702.1
(22) Date of filing: 14.05.2010
(51) Int. Cl.: H04L 12/28, H04L 12/42, H04L 25/02, H04L 5/14

(54) **NETWORK SYSTEM AND NODE**
NETZWERKSYSTEM UND NETZWERKKNOTEN
SYSTÈME ET NOEUD DE RÉSEAU

(30) Priority: 22.05.2009 JP 2009123933
(43) Date of publication of application: 28.03.2012
(73) Proprietor: Azbil Corporation, Chiyoda-ku Tokyo 100-6419 (JP)
(72) Inventor: SEITA, Atsushi, Tokyo 100-6419 (JP); INAMI, Taro, Tokyo 100-6419 (JP); UEDA, Osamu, Tokyo 100-6419 (JP); MITSUI,Masaki, Tokyo 100-6419 (JP); AOKI, Takanori, Tokyo 100-6419 (JP); NAGASHIMA, Naoki, Tokyo 100-6419 (JP)
(74) Representative: Lavoix
(86) International application number: PCT/JP2010/058176
(87) International publication number: WO 2010/134469

(56) References cited:
- EP-A1- 1 720 293
- JP-A- 8 149 161
- JP-A- 10 032 483
- JP-A- 2006 314 098
- JP-A- 2008 187 684
- US-A- 5 625 621
- US-A1- 2009 022 057

## Description

### Field of Technology

The present invention relates to networking technology, and, in particular, relates to a network connecting technology for connecting a plurality of nodes in a ring shape.

### Prior Art

EP 1 720 293 A1 relates to a method for providing redundancy in a daisy chain local area network employing Category 5 cabling for connecting network devices uses the normally unused twisted wire pairs in the single Cat 5 cable connecting adjacent network devices. The method includes forming in each network device a passive signal path connecting pins of an upstream port associated with the normally unused twisted wire pairs of the Cat 5 cable to pins of a downstream port associated with the normally unused twisted wire pairs of the Cat 5 cable, forming loop back connections at the terminal network devices where the loop back connections connect the normally used twisted wire pairs to the normally unused twisted wire pairs of the Cat 5 cable connected to the terminal network devices, and implementing a Spanning Tree Protocol in each of the network devices for defining an active signal path through the local area network.

US 2009/022057 A1 concerns a communication system provided for generating and monitoring data over pre-existing conductors between associated pieces of networked computer equipment. The system includes a communication device attached to the electronic equipment that transmits information to a central module by impressing a low frequency signal on the pre-existing data lines of the remotely located equipment. A receiver in the central module monitors the low frequency data on the data lines to determine the transmitted information of the electronic equipment.

In networking systems, such as monitoring and control systems for monitoring and controlling building facilities and plant equipment, nodes, such as control devices for providing a variety of functions, such as data collection functions and control functions, through executing application software, are connected together through data communication wires, and various types of information are exchanged between the nodes in order to perform monitoring and control of the individual devices at each of the nodes.

In such networking systems, the data communication systems for tying together the nodes broadly use bus-type communication systems, such as RS-485. However, in such communication systems the communication speed is slow and it is not possible to ensure an adequate communication bandwidth, and thus when performing complex monitoring and control, a communication system with a faster communication bandwidth is required.

In such a network system, the implementation of an Ethernet (Ethernet/IEEE802.3u:100BASE-T™) has been proposed as the communication system in order to perform high-speed data communication between nodes.

Ethernet is based on connecting multiple nodes by connecting each node to a hub/switch in a star-wired system. While this type of star-wiring system is well-suited to a relatively small-sized office environment, it is not always suited to larger facilities, such as building facilities or plant facilities. The reason for this is that it is necessary to connect each node to the hub/switch through its own individual wire in a star-wired system, so when the nodes are located across a large area, the wiring for connecting between the nodes becomes complex, and the amount of operating overhead in the wiring work and maintenance becomes large.

On the other hand, there has been a proposal for a ring-type Ethernet for network systems that use Ethernet, wherein each node is given two ports, and the individual nodes are connected through communication cables, such as UTP (unshielded twisted pair cables), in a ring shape. This ring-type Ethernet is able to produce redundancy in the system through the use of network control functions such as the STP (Spanning Tree Protocol/IEEE 802.1D) function for avoiding communication error through the ring topology that exists in the data communication lines, and the RSTP (Rapid Spanning Tree Protocol/IEEE 802.1w), which is an improvement thereof.

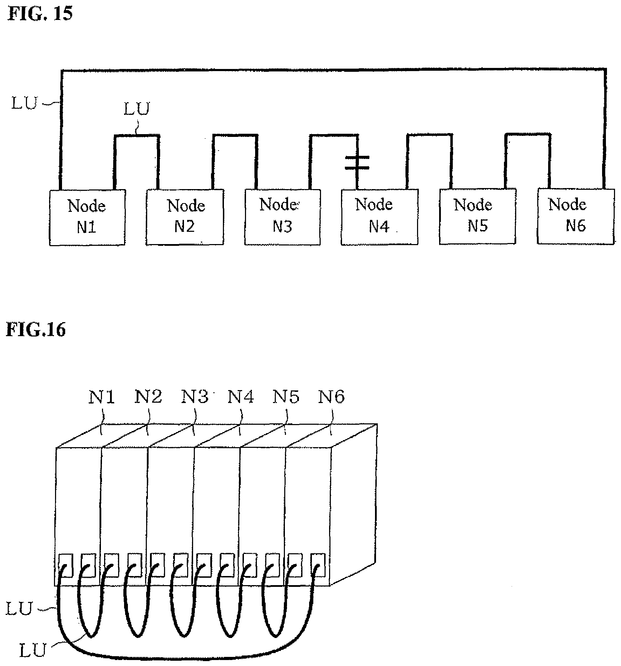

FIG. 15 is an example configuration of a conventional ring-type Ethernet system. FIG. 16 is an example of connections in a conventional ring-type Ethernet system. Here the six nodes N1 through again 6, which are lined up attached to a frame, such as a DIN rail, are ring-connected by a communication cable LU, and blocking is performed by the port of the node N4 that is on the node N3 side.

This blocking structures, from the original ring that has a ring topology, a tree topology that has two branch routes, a route from node N1 to node N2 →node N3 and node N5 →node N4. As a result, even though this is a network that physically forms a ring topology, the creation of a data loop is prevented.

### Prior Art Documents

### Patent Documents

Patent Document 1: Japanese Examined Patent Application Publication 2008-544658
Patent Document 2: Japanese Unexamined Patent Application Publication 2005-109846

### Disclosure of the Invention

The invention is defined by the appended claims. Embodiments not falling under the scope of the claims should be interpreted as examples useful for understanding the invention.

### Problem Solved by the Present Invention

However, in this type of conventional technology a ring-Ethernet is structured through connecting between the individual nodes through data communication lines that are formed from communication cables, and thus the hardware required for connecting between nodes is complex, not only increasing the overall product cost of the network, but also having a problem in that the maintenance work overhead is increased as well.

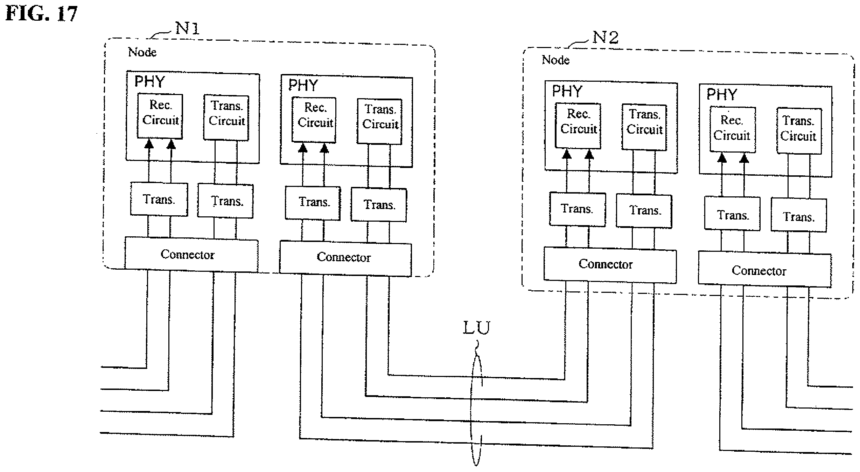

FIG. 17 is a block diagram illustrating the critical portions of conventional circuits for connecting between nodes. In the case of Ethernet, a transmitting circuit and a receiving circuit that are provided in a physical layer portion PHY of an individual node N are connected to a receiving circuit and a transmitting circuit that are provided in a physical layer portion PHY of another node, through a communication cable LU, such as an UTP.

In order to obtain a constant communication quality over a specific communication routes length, the transmitting circuits and the receiving circuits are connected through transformers to connecting portions, and these connector portions are connected together by the communication cable LU.

Consequently, a signal that is outputted from a transmitting circuit of one node N1, for example, is received by a receiving circuit of another node N2 through a transformer, a connecting portion, a communication cable LU, another connecting portion, and another transformer. Because of this, many circuit elements must be provided in order to perform the data communication, even between nodes wherein the communication route length is extremely short, such as those disposed adjacent to each other in the same frame, as shown in FIG. 16, which increases the cost of the nodes themselves, and also increases the product cost of the network as a whole.

Moreover, a communication cable LU is required between each of the nodes, which increases the maintenance work in order to handle, for example, connection defects, disconnected cables, and the like, between the nodes and the communication cables LU. Moreover, this increases the possibility of incorrect wiring.

The present invention is to solve this type of problem, and the object thereof is to provide a network connecting technology wherein it is possible to connect a plurality of nodes via data communication lines through extremely simple hardware.

### Means for Solving the Problem

In order to achieve the object set forth above, a network system according to the present invention is a network system according to claims 1 or 2.

Moreover, a node according to claim 5 is provided.

### Effects of the Invention

Given the present invention, a full-duplex Ethernet system for connecting, in a daisy chain, individual nodes that are disposed adjacently is structured without using communication cables. Because of this, it is possible to connect, through data communication lines, a plurality of nodes using extremely simple hardware, without requiring an individual communication cable for each node and also without requiring a hub or switch.

### Brief Description of the Drawings

FIG. 1 is a block diagram illustrating a structure of a network system and a node according to a first form of embodiment according to the present invention.
FIG. 2 is a connector layout example for the nodes and the adapters.
FIG. 3 is an explanatory diagram illustrating the state of connection between nodes in the network system.
FIG. 4 is an explanatory diagram illustrating the state of connection between a node and an adapter in the network system.
FIG. 5 is an explanatory diagram illustrating another state of connection between a node and an adapter in the network system.
FIG. 6 is an example of connections between a line of nodes using communication cables.
FIG. 7 is an example configuration of a network system based on the example of connections in FIG. 6.
FIG. 8 is an explanatory diagram illustrating a state of connection between a connector and a communication wire.
FIG. 9 is an explanatory diagram illustrating another state of connection between a connector and a communication wire.
FIG. 10 is a block diagram illustrating a structure of a network system and a node according to a second form of embodiment according to the present invention.
FIG. 11 is an example configuration of a loop-back plug.
FIG. 12 is an example of connections between a line of nodes using loop-back plugs and communication cables.
FIG. 13 is an example configuration of a network system based on the example of connections in FIG. 12.
FIG. 14 is a block diagram illustrating a structure of a network system and a node according to a third form of embodiment according to the present invention.
FIG. 15 is an example configuration of a conventional ring-type Ethernet system.
FIG. 16 is an example of connections in a conventional ring-type Ethernet system.
FIG. 17 is a block diagram illustrating the critical portions of conventional circuits for connecting between nodes.

### Forms for Embodying the Present Invention

Forms for carrying out the present invention will be explained next in reference to the figures.

### [First Form of Embodiment]

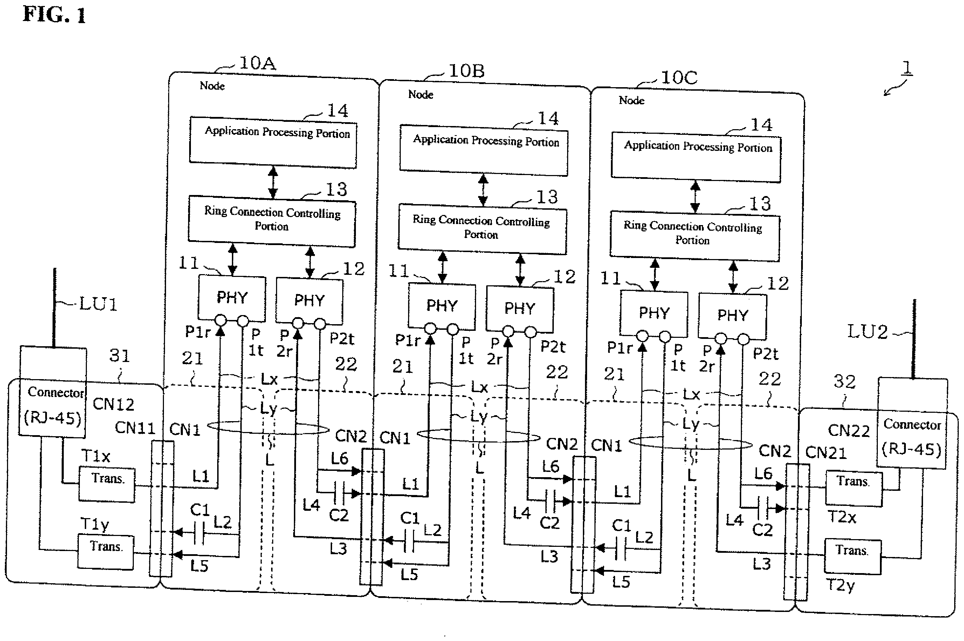

First of all, a network system according to a first form of embodiment according to the present invention will be explained in reference to FIG. 1. FIG. 1 is a block diagram illustrating a structure of a network system and a node according to a first form of embodiment according to the present invention.

This network system 1 is a full-duplex Ethernet, used as a network system for a monitoring and control system for monitoring and controlling building facilities or plant facilities, for connecting, in the shape of a ring, through data communication lines L, nodes 10 (10A, 10B, 10C,...), such as control devices for providing various types of functions, such as information collecting functions and control functions, through executing application software.

Each node 10 has a function for performing a redundant control process on the data communication line based on a rapid spanning tree protocol (RSTP). The data communication line L is a ring-shaped communication line for achieving data communication based on a full-duplex Ethernet, where two independent communication wires Lx and Ly are provided in the data communication line L, in order to perform data transmission and reception in parallel, between each of the nodes 10.

The node 10 is provided with a physical layer portion (PHY: first physical layer portion) 11, a physical layer portion (PHY: second physical layer portion) 12, a ring connection controlling portion 13, and application processing portion 14, a connector portion (a first connector portion) 21, and a connector portion (second connector portion) 22, as the main functional portions thereof.

The physical layer portion 11 is made from a specialized communication circuit that includes a receiving port P1r of a data transmitting line Lx and a transmitting port P1t of a data transmitting line Ly, and has functions for data transmission and reception in the physical layer through an adjacent node (a first adjacent node) that is adjacent on one side of the node 10 and a data communication line L.

The physical layer portion 12 is made from a specialized communication circuit that includes a receiving port P2r of a data transmitting line Ly and a transmitting port P2t of a data transmitting line Lx, and has functions for data transmission and reception in the physical layer through an adjacent node (a first adjacent node) that is adjacent on the other side of the node 10 and a data communication line L.

The ring connection controlling portion 13 has a function for performing data communication with another node 10 through the physical layer portions 11 and 12, and a function for performing redundant control processing relative to the data communication line L, based on RSTP.

The application processing portion 14 has a function for performing various types of application processes for monitoring and controlling, for example, building facilities and plant facilities, through performing data communication in a higher layer with another node N through the link connection controlling portion 13.

The connector portion 21 has a function for connecting electrically the data communication line of the node and an adjacent node that is adjacent on one side of the node.

The connector portion 22 has a function for connecting electrically the data communication line of the node and an adjacent node that is adjacent on the other side of the node.

As a result, when nodes 10A through 10C, for example, are disposed adjacently on a frame, such as a DIN rail, the connector portion 21 of the node 10B is connected to the connector portion 22 of one adjacent node (the first adjacent node) 10A, and the connector portion 22 of the node 10B is connected to be connector portion 22 of the other adjacent node (the second adjacent node) 10C.

In the present form of embodiment, the connector portion 21 includes communication wires L1 for connecting the receiving port P1r of the physical layer portion 11 of the node to one of the adjacent nodes, and communication wires L2 for connecting the transmitting port P1t of the physical layer portion 11 through a capacitor (a capacitive element) C1 to the one adjacent node, and the connector portion 22 includes communication wires L3 for connecting the receiving port P2r of the physical layer portion 12 of the node to the other adjacent node, and communication wires L4 for connecting the transmitting port P2t of the physical layer portion 12 through a capacitor (a capacitive element) C2 to the other adjacent node, where by connecting to the connector portion 22 of the one adjacent node, the connector portion 21 not only connects the communication wires L1 of the node to the communication wires L4 of the adjacent node on the one side, and connects the communication wires L2 of the node to the communication wires L3 of the adjacent node on the one side.

The structures and operations of the network system 1 and node 10 according to the present form of embodiment will be explained in detail next, referencing FIG. 1. Note that in FIG. 1, the pairs of communication wires L1 through L10 in the present form of embodiment are illustrated abbreviated as single wires.

A connector CN1, a capacitor C1, and communication wires L1, L2, and L3 are provided in the connector portion 21. The connector CN1 is a connector for connecting electrically the data communication wires L of the node 10 and of an adjacent node that is adjacent on one side of the node 10. The capacitor C1 is a capacitor for isolation, for isolating the DC potential difference between the node 10 and the data communication wires L. The communication wire L1 is a communication wire for the data communication line Lx for connecting the connector CN1 and the receiving port P1r of the physical layer portion 11. The communication wire L2 is a communication wire for the data communication line Ly for connecting the connector CN1 and the transmitting port P1t of the physical layer portion 11 through the capacitor C1. The communication wire L3 is a communication wire for the data communication line Ly for connecting the connector CN1 and the transmitting port P1t of the physical layer portion 11.

A connector CN2, a capacitor C2, and communication wires L4, L5, and L6 are provided in the connector portion 22. The connector CN2 is a connector for connecting electrically the data communication wires L of the node 10 and of an adjacent node that is adjacent on the other side of the node 10. The capacitor C2 is a capacitor for isolation, for isolating the DC potential difference between the node 10 and the data communication wires L. The communication wire L4 is a communication wire for the data communication line Ly for connecting the connector CN1 and the receiving port P2r of the physical layer portion 12. The communication wire L5 is a communication wire for the data communication line Lx for connecting the connector CN2 and the transmitting port P2t of the physical layer portion 12 through the capacitor C2. The communication wire L6 is a communication wire for the data communication line Lx for connecting the connector CN2 and the transmitting port P2t of the physical layer portion 12.

Additionally, in the network system 1 according to the present form of embodiment, adapters 31 and 32 are connected to both sides of the node 10, disposed adjacently.

Connectors CN11 and CN12, terminal transformers T1x and T1y, and communication wires L7 and L8 are provided in the adapter 31. The connector CN11 is a connector for connecting electrically the data communication wires L and the node 10 to which the adapter 31 is connected. The connector CN (the first cable connector) 12 is made from a connector such as, for example, an RJ-45, and is a cable connector for connecting the communication cable (the first communication cable) LU1 that structures the data communication line L. The terminal transformers T1x and T1y are terminal transformers for not only isolating the node 10 from the respective DC potential differences of the data communication lines Lx and Ly of the communication cable LU1, but also for terminating through matching the respective impedances. The communication wire L7 is a communication wire for the data communication line Lx for connecting the connector CN11 and the cable connector CN12 through the terminal transformer T1x. The communication wire L8 is a communication wire for the data communication line Ly for connecting the connector CN11 and the cable connector CN12 through the terminal transformer T1y.

Connectors CN21 and CN22, terminal transformers T2x and T2y, and communication wires L9 and L10 are provided in the adapter 32. The connector CN21 is a connector for connecting electrically the data communication wires L and the node 10 to which the adapter 32 is connected. The connector CN22 (the second cable connector) is made from a connector such as, for example, an RJ-45, and is a cable connector for connecting the communication cable (the second communication cable) LU2 that structures the data communication line L. The terminal transformers T2x and T2y are terminal transformers for not only isolating the node 10 from the respective DC potential differences of the data communication lines Lx and Ly of the communication cable LU2, but also for terminating through matching the respective impedances. The communication wire L9 is a communication wire for the data communication line Ly for connecting the connector CN21 and the cable connector CN22 through the terminal transformer T2y. The communication wire L10 is a communication wire for the data communication line Lx for connecting the connector CN21 and the cable connector CN22 through the terminal transformer T2x.

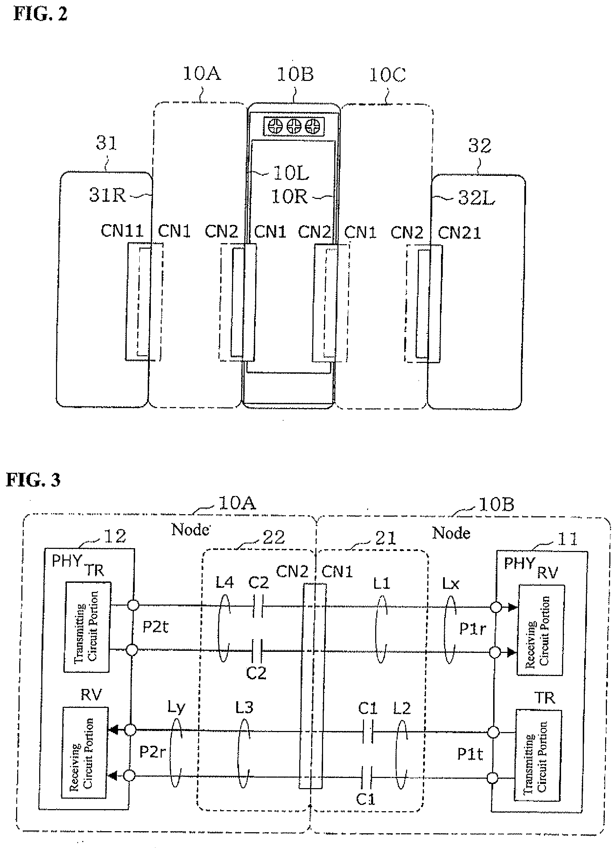

FIG. 2 is a connector layout example for the nodes and the adapters according to the present form of embodiment. Here connectors CN1 and CN2 are disposed so that the connecting terminals face sideways, so as to face the respectively adjacent node sides, on the left and right side terminal portions 10L and 10R on the back face portion of each node 10. As shown in FIG. 1, when the nodes 10A, 10B, and 10C are disposed adjacently, the connector CN1 of the node 10B fits together with the connector CN2 of the node 10A, and the connector CN2 of the node 10B fits together with the connector CN1 of the node 10C. This connects between the adjacent nodes 10 without using communication cables.

Moreover, the connector CN11 is disposed on the right side terminal portion 31R on the back face portion of the adapter 31 so that the connecting terminals face sideways so as to face the adjacent node side, and the connector CN21 is disposed on the left side terminal portion 32R on the back face portion of the adapter 32 so that the connecting terminals face sideways so as to face the adjacent node side. As a result, as shown in FIG. 1, when the adapter 31 is disposed adjacent to node 10A, which is positioned at one end of the adjacently disposed nodes 10A, 10B, and 10C, and the adapter 32 is disposed adjacent to the node 10C that is positioned at the other end, the connector CN11 of the adapter 31 fits together with the connector CN1 of the node 10A, and the connector CN21 of the adapter 32 fits together with the connector CN2 of the node 10C. As a result, the node 10A is connected to the communication cable LU1 and the node 10C is connected to the communication cable LU2, so the data communication lines L of the adjacently disposed nodes 10A, 10B, and 10C, are connected through the communication cables LU1 and LU2 to other nodes that are disposed in remote locations.

FIG. 3 is an explanatory diagram illustrating the state of connection between nodes in the network system according to the present form of embodiment, illustrating the state of connection between the nodes 10A and 10B in FIG. 1 as an example.

As illustrated in FIG. 3, when the nodes 10A and 10B are disposed adjacently, the connector CN2 of the node 10A and the connector CN1 of the node 10B are connected, the communication wires L4 of the node 10A and the communication wires L1 of the node 10B are connected, and the communication wires L3 of the node 10A and the communication wires L2 of the node 10B are connected.

As a result, the transmitting port P2t of the transmitting circuit TR that is provided in the physical layer portion 12 of the node 10A is connected through the isolating capacitor C2 of the communication wire L6 to the receiving port P1r of the receiving circuit RV that is provided in the physical layer portion 11 of the node 10B, to form a pair of communication lines for the data communication line Lx.

Moreover, the transmitting port P1t of the transmitting circuit TR that is provided in the physical layer portion 11 of the node 10B is connected through the isolating capacitor C1 of the communication wire L3 to the receiving port P2r of the receiving circuit RV that is provided in the physical layer portion 12 of the node 10A, to form a pair of communication lines for the data communication line Ly.

In this way, the two independent data communication lines Lx and Ly are formed through connecting between the adjacent nodes 10 through the respective connector portions 21 and 22. A full-duplex Ethernet system for connecting, in a daisy chain, individual nodes 10 that are disposed adjacently is structured thereby without using communication cables.

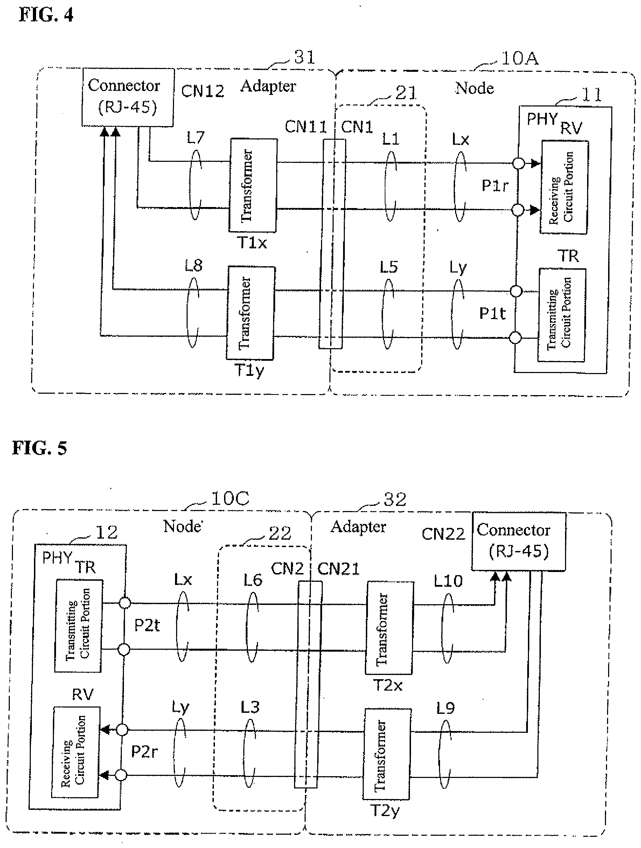

FIG. 4 is an explanatory diagram illustrating the state of connection between a node and an adapter in the network system according to the present form of embodiment, illustrating the state of connection between the node 10A and the adapter 31 in FIG. 1 as an example.

As illustrated in FIG. 4, when the node 10A and the adapter 31 are disposed adjacently, the connector CN1 of the node 10A and the connector CN11 of the adapter 31 are connected, the communication wires L1 of the node 10A and the communication wires L7 of the adapter 31 are connected, and the communication wires L5 of the node 10A and the communication wires L8 of the adapter 31 are connected.

As a result, the receiving port P1r of the receiving circuit RV that is provided in the physical layer portion 11 of the node 10A is connected through the terminal transformer T1x of the communication wire L7 from the communication wire L1 to the cable connector CN12 of the adapter 31, to form a communication line for the data communication line Lx. Moreover, the transmitting port P1t of the transmitting circuit TR that is provided in the physical layer portion 11 of the node 10A is connected through the terminal transformer T1y of the communication wire L8 from the communication wire L2 to the cable connector CN12 of the adapter 31, to form a communication line for the data communication line Ly.

FIG. 5 is an explanatory diagram illustrating another state of connection between a node and an adapter in the network system according to the present form of embodiment, illustrating the state of connection between the node 10C and the adapter 32 in FIG. 1 as an example.

As illustrated in FIG. 5, when the node 10C and the adapter 32 are disposed adjacently, the connector CN2 of the node 10C and the connector CN21 of the adapter 32 are connected, the communication line L3 of the node 10C and the communication line L9 of the adapter 32 are connected, and the communication line L6 of the node 10C and the communication wires L10 of the adapter 32 are connected.

As a result, the transmitting port P2t of the transmitting circuit TR that is provided in the physical layer portion 12 of the node 10C is connected through the terminal transformer T2x of the communication wire L10 from the communication wire L6 to the cable connector CN22 of the adapter 32, to form a communication line for the data communication line Lx. Moreover, the receiving port P2r of the receiving circuit RV that is provided in the physical layer portion 12 of the node 10C is connected through the terminal transformer T2y of the communication wire L9 from the communication wire L3 to the cable connector CN22 of the adapter 32, to form a communication line for the data communication line Ly.

In this way, the two independent data communication lines Lx and Ly are connected to the communication cable LU1 through connecting the adjacent node 10A to the adapter 31 through the connector portion 21. Moreover, the two independent data communication lines Lx and Ly are connected to the communication cable LU2 through connecting the adjacent node 10C to the adapter 32 through the connector portion 22.

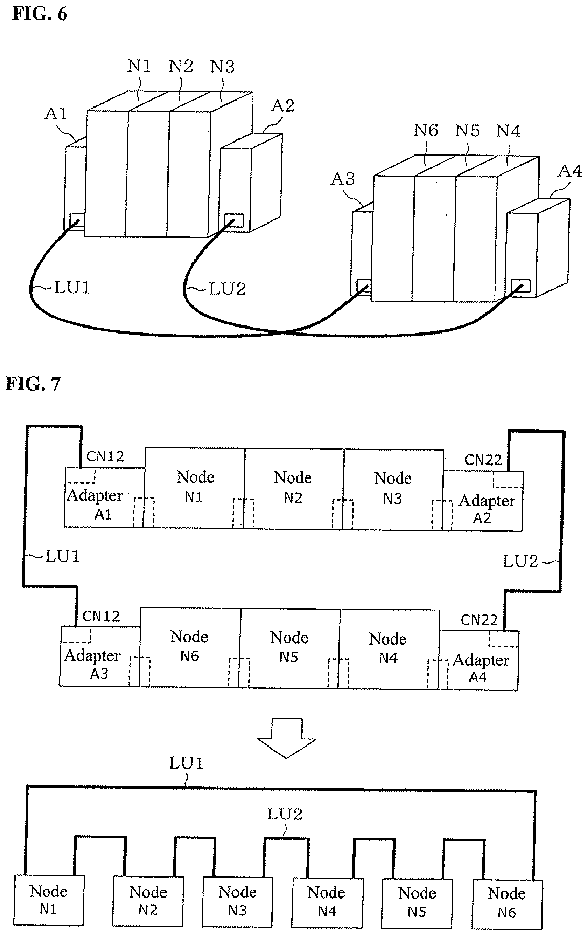

FIG. 6 is an example of connections between a line of nodes using communication cables. FIG. 7 is an example configuration of a network system based on the example of connections in FIG. 6. Here, as is illustrated in FIG. 1, of the node array comprising nodes N1, N2, and N3, which are disposed adjacently, and the node array comprising nodes N4, N5, and N6, which, similarly, are disposed adjacently, the adapter A1, which is connected to the node N1, and the adapter A3, which is connected to the node N6, are connected together through the communication cable LU1, and the adapter A2 that is connected to the node N3 and the adapter A4 that is connected to the node N4 are connected through the communication cable LU2.

As a result, as illustrated in FIG. 7, multiple node arrays that are disposed in remote locations are connected through the communication cables LU1 and LU2, to structure a full-duplex Ethernet system wherein these nodes N1 through N6 are connected in a ring.

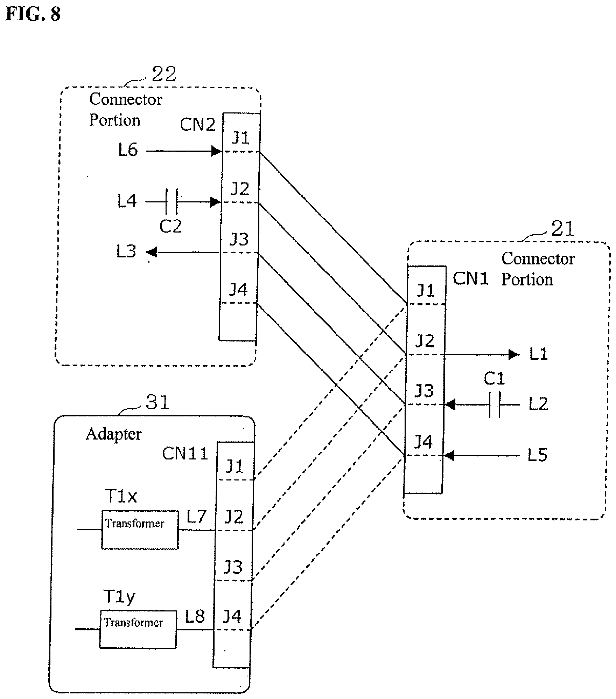

FIG. 8 is an explanatory diagram illustrating a state of connection between a connector and a communication wire. In the present form of embodiment, as illustrated in FIG. 8, more connecting terminals than the number of communication wires of the data communication lines Lx and Ly are used in the connectors CN1 and CN2 of the node 10, and the connector CN11 of the adapter 31. As shown in FIG. 3 through FIG. 5, two sets of communication wires, that is, a total of four communication wires, are required in order to structure each of the data communication lines Lx and Ly from respective pairs of communication wires. In contrast, in the present form of embodiment, in the connectors CN1, CN2, and CN11, 4 connecting terminal sets J1 through J4 are provided for connecting four sets of communication wires, that is, a total of eight communication wires. Note that in FIG. 8, the pairs of communication wires are illustrated abbreviated as single wires.

Specifically, the connector CN1 is provided with a connecting terminal set J1 in an electrically open state, wherein neither of the connecting wires is connected, a connecting terminal set J2 that is connected to the communication wires L1, a connecting terminal set J3 that is connected to the communication wires L3 that include the capacitor C1, and a connecting terminal set J4 that is connected to the communication wires L5.

Moreover, the connector CN2 is provided with a connecting terminal set J1 that is connected to the communication wires L6, a connecting terminal set J2 that is connected to the communication wires L4 that include the capacitor C2, a connecting terminal set J3 that is connected to the communication wires L3, and a connecting terminal set J4 that is in the open state.

Moreover, the connector CN11 is provided with the connecting terminal sets J1 and J3, which are in the open state, the connecting terminal set J2 that is connected to the communication wires L7 that include the terminal transformer T1x, and the connecting terminal set J4 that is connected to the communication wires L8 that include the terminal transformer T1y.

As a result, when the connector CN2 of one node 10 is connected to the connector CN1 of another node 10, the connecting terminal set J1 of the connector CN1 and the connecting terminal set J4 of the connector CN2 are in the open state, and the connecting terminal sets J2 and J3 of the connector CN1 are connected to the connecting terminal sets J2 and J3 of the connector CN2. Consequently, the communication wires L1 and L3 of one node 10 are connected respectively to the communication wires L4 and L3 of the other node 10, so that, as illustrated in FIG. 3, the nodes 10 are connected together in a state wherein the DC potential differences are electrically isolated by the capacitors C1 and C2.

On the other hand, when the connector CN11 of the adapter 31 is connected to the connector CN1 of the node 10, the connecting terminal sets J1 and J3 of the connector CN11 are in the open state, and the connecting terminal sets J2 and J4 of the connector CN1 and the connecting terminal sets J2 and J4 of the connector CN11 are connected together. Consequently, the communication wires L1 and L5 of the node 10 are connected respectively to the communication wires L7 and L8 of the adapter 31, so that, as illustrated in FIG. 4, the node 10 and the adapter 31 are connected together in a state wherein the DC potential differences are electrically isolated by the terminal transformers T1x and T1y.

As a result, it is only when a node 10 is connected to another node 10 that the capacitors C1 and C2 are inserted into the respective data communication lines Lx and Ly that connect the two together. Moreover, when the adapter 31 is connected to a node 10, the capacitors C1 and C2, which are not necessary to the connections with the communication cable, are excluded from the data communication lines Lx and Ly that connect the two together, and only the terminal transformers T1x and T1y, which are required for the connections with the communication cable, are inserted into the respective data communication lines Lx and Ly.

As a result, it is possible to connect either a connector CN2 of another node 10 or a connector CN11 of an adapter 31, in common, to the connector CN1 of a node 10, without requiring a switch for circuit switching.

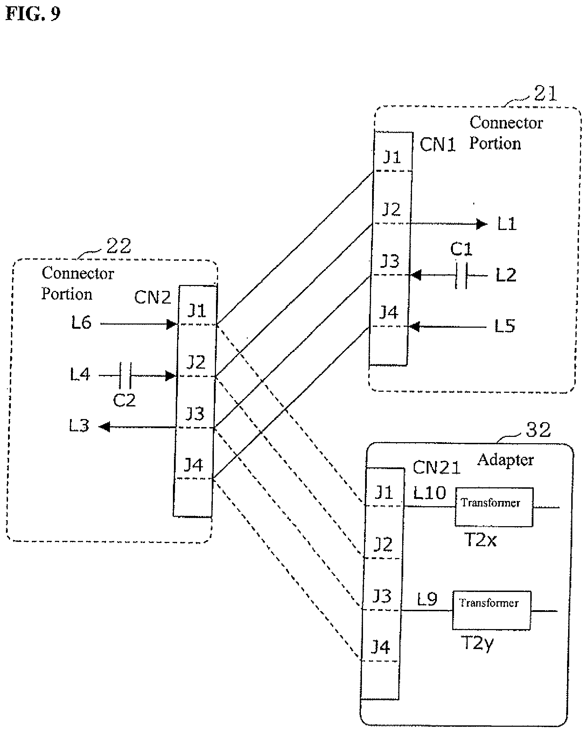

FIG. 9 is an explanatory diagram illustrating another state of connection between a connector and a communication wire. In the present form of embodiment, as illustrated in FIG. 9, more connecting terminals than the number of communication wires of the data communication lines Lx and Ly are used in the connector CN11 of the adapter 32 as well, as was the case with the adapter 31. As a result, in the connector CN21 as well, 4 connecting terminal sets J1 through J4 are provided for connecting four sets of communication wires, that is, a total of eight communication wires. Note that in FIG. 9, the pairs of communication wires are illustrated abbreviated as single wires.

Specifically, the connector CN21 is provided with a connecting terminal set J1 that is connected to the communication wires L10 that include the terminal transformer T2x, the connecting terminal set J2 that is connected to the communication wires L9 that include the terminal transformer T1y, and the connecting terminal sets J2 and J4, which are in the open state. Note that the connecting terminal sets J1 through J4 of the connectors CN1 and CN2 are the same as in FIG. 8.

As a result, when the connector CN1 of one node 10 is connected to the connector CN2 of another node 10, the connecting terminal set J1 of the connector CN1 and the connecting terminal set J4 of the connector CN2 are in the open state, and the connecting terminal sets J2 and J3 of the connector CN1 are connected to the connecting terminal sets J2 and J3 of the connector CN2. Consequently, the communication wires L4 and L3 of one node 10 are connected respectively to the communication wires L1 and L2 of the other node 10, so that, as illustrated in FIG. 3, the nodes 10 are connected together in a state wherein the DC potential differences are electrically isolated by the capacitors C1 and C2.

On the other hand, when the connector CN21 of the adapter 32 is connected to the connector CN2 of the node 10, the connecting terminal sets J2 and J4 of the connector CN21 are in the open state, and the connecting terminal sets J1 and J3 of the connector CN2 and the connecting terminal sets J1 and J3 of the connector CN21 are connected together. Consequently, the communication wires L6 and L3 of the node 10 are connected respectively to the communication wires L10 and L9 of the adapter 32, so that, as illustrated in FIG. 5, the node 10 and the adapter 32 are connected together in a state wherein the DC potential differences are electrically isolated by the terminal transformers T2x and T2y.

As a result, it is only when a node 10 is connected to another node 10 that the capacitors C1 and C2 are inserted into the respective data communication lines Lx and Ly that connect the two together. Moreover, when the adapter 32 is connected to a node 10, the capacitors C1 and C2, which are not necessary to the connections with the communication cable, are excluded from the data communication lines Lx and Ly that connect the two together, and only the terminal transformers T2x and T2y, which are required for the connections with the communication cable, are inserted into the respective data communication lines Lx and Ly.

As a result, it is possible to connect either a connector CN1 of another node 10 or a connector CN21 of an adapter 32, in common, to the connector CN2 of a node 10, without requiring a switch for circuit switching.

### [Effects of the First Form of Embodiment]

In this way, the connector portion 21 includes a communication wires L1 for connecting the receiving port P1r of the physical layer portion 11 of the node 10 to one of the adjacent nodes 10, and a communication wires L2 for connecting the transmitting port P1t of the physical layer portion 11 through a capacitor C1 to the one adjacent node, and the connector portion 22 includes a communication wires L3 for connecting the receiving port P2r of the physical layer portion 12 of the node to the other adjacent node, and a communication wires L4 for connecting the transmitting port P2t of the physical layer portion 12 through a capacitor C2 to the other adjacent node, where by connecting to the connector portion 22 of the one adjacent node, the connector portion 21 not only connects the communication wires L1 of the node to the communication wires L4 of the adjacent node on the one side, and connects the communication wires L2 of the node to the communication wires L3 of the adjacent node on the one side.

Consequently, the two independent data communication lines Lx and Ly are formed through connecting between the adjacent nodes 10 through the respective connector portions 21 and 22. A full-duplex Ethernet system for connecting, in a daisy chain, individual nodes 10 that are disposed adjacently is structured thereby without using communication cables. Because of this, it is possible to connect data communication lines L of the individual nodes 10 using extremely simple hardware, without requiring an individual communication cable for each node 10 and also without requiring a hub or switch.

Moreover, in the present form of embodiment the connector portion 21 further includes communication wires L5 for connecting a transmitting port P1t of a physical layer portion 11 to one of the adjacent nodes, and the connector portion 22 further includes communication wires L6 for connecting a transmitting port P2t of a physical layer portion 12 to the other of the adjacent nodes, where, by the adapter 31, by connecting the connector portion 21 of the node 10, the communication lines L1 and L5 of the node 10 are connected to the cable connector CN12 by the communication wires L7 and L8, through the respective individual terminal transformers T1x and T1y, and by connecting the connector portion 22 of the node 10, the communication wires L3 and L6 of the node 10 are connected to the cable connector CN22, by the communication wires L9 and L10, through the respective individual terminal transformers T2x and T2y.

As a result, the node 10 is connected to the adapter 31 through the connector portion 21, so the two independent data communication lines Lx and Ly are connected through the cable connector CN12 to the communication cable LU1. Additionally, the node 10C is connected to the adapter 32 through the connector portion 22, so the two independent data communication lines Lx and Ly are connected through the cable connector CN22 to the communication cable LU2. Consequently, even when a plurality of node arrays are disposed in separate locations, it is still possible to structure these nodes 10 into a ring-shaped full-duplex Ethernet system.

In particular, because the wire lengths of the data communication lines are extremely short between adjacent nodes, so that there is little effect of noise, these can be connected together directly through capacitors. On the other hand, when there is a communication cable and the wire lengths of the data communication lines have some degree of length, it is necessary to consider the effect of noise, and thus terminal transformers are provided. In this case, circuit portions such as noise filters, and the like, may be added to the terminal transformers.

### [Second Form of Embodiment]

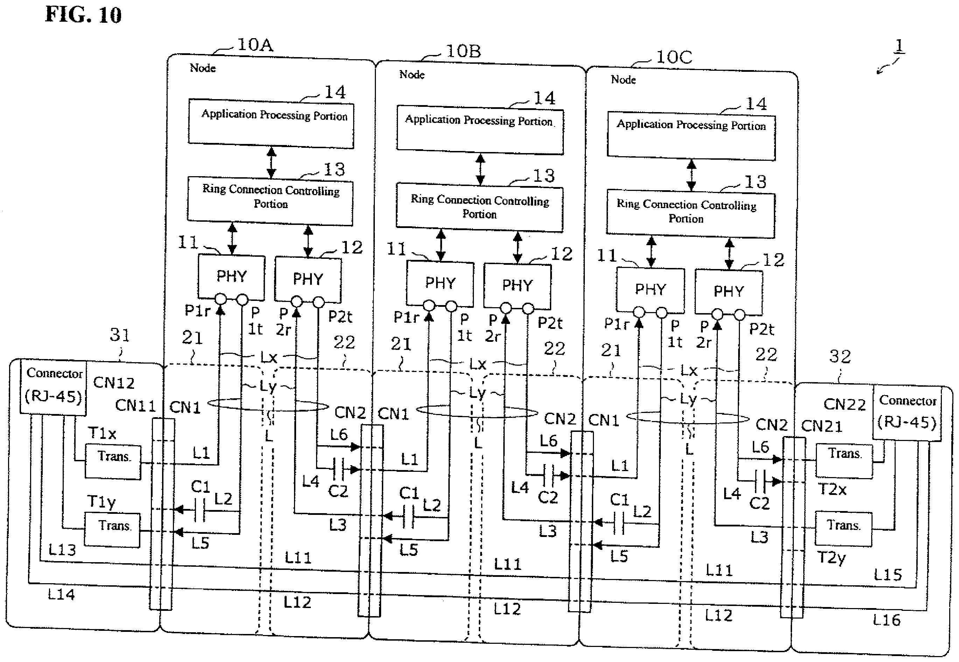

Next a network system according to a second form of embodiment according to the present invention will be explained in reference to FIG. 10. FIG. 10 is a block diagram illustrating a structure of a network system and a node according to a second form of embodiment according to the present invention.

In the first form of embodiment, a case was explained wherein connector portions 21 and 22 were provided in the node 10 to connect directly data communication lines L between adjacent nodes 10 without using communication cables.

In the present form of embodiment, as illustrated in FIG. 10, two communication wires L11 and L12, for node by passing, are provided in each node 10 connecting the connector portion 21 and the connector portion 22 together directly through the node 10. These communication wires L11 and L12 are structured from one pair of communication wires each, and do not connect to circuit portions such as the physical layer portions 11 and 12 of the node 10. Note that in FIG. 10, the pairs of communication wires L1 through L16 in the present form of embodiment are illustrated abbreviated as single wires. Note that the other structures are identical to those in the first form of embodiment, and thus explanations thereof will be omitted here.

As a result, when, for example, a connector CN1 that is provided in a connector portion 21 of a node 10B is connected to a connector CN2 that is provided in a connector portion 22 of a node 10A, the communication wires L11 and L12 of the node 10B connect, respectively, to the communication wires L11 and L12 of the node 10 A. Consequently, these communication wires L11 and L12 can be used as redundant paths for the data communication lines Lx and Ly.

Moreover, communication wires L13 and L14, for connecting between the connector CN11 and the cable connector CN12 directly, are provided in the adapter 31, and communication wires L15 and L16, for connecting between the connector CN21 and the cable connector CN22 directly, are provided in the adapter 32.

As a result, when, for example, the adapter 31 is connected to the node 10A, the communication wires L11 and L12 of the node 10A are connected directly to the cable connector CN12 and adapter 31 through the communication wires L13 and L14. Moreover, when the adapter 32 is connected to the node 10C, the communication wires L11 and L12 of the node 10A are connected directly to the cable connector CN12 and adapter 32 through the communication wires L15 and L16.

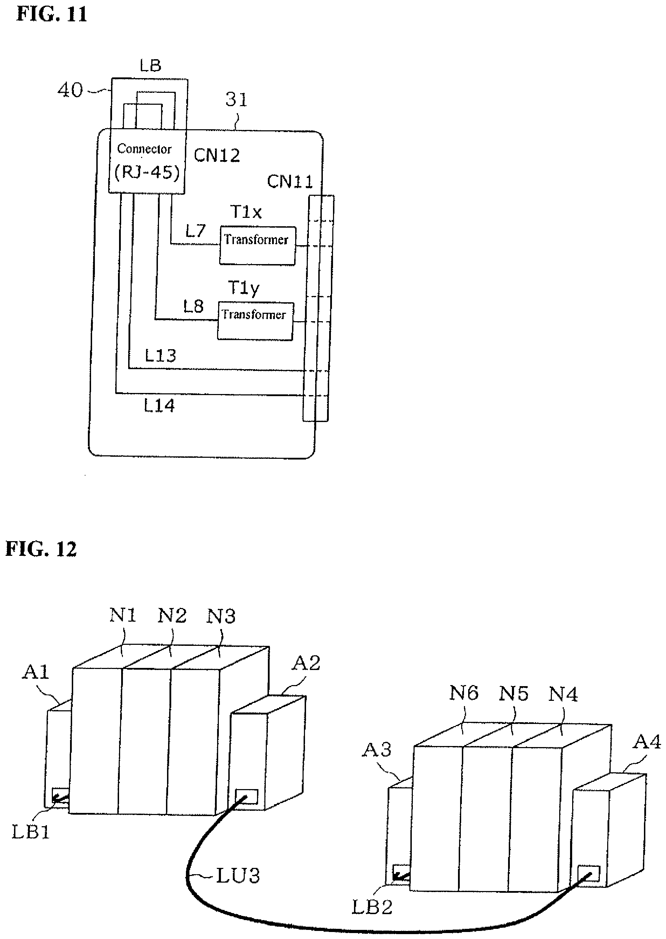

FIG. 11 is an example configuration of a loop-back plug. The loop-back plug 40 has two loop-back communication lines LB, each made from a pair of communication wires, and when connected to the cable connector CN12 of the adapter 31, makes loop-back connections of the cable connector CN12 data communication line Lx and Ly communication wires L7 and L8 and node bypass communication wires L13 and L14. Moreover, when connected to the cable connector CN12 of the adapter 31, makes loop-back connections of the cable connector CN22 data communication line Lx and Ly communication wires L 9 and L10 and node bypass communication wires L15 and L16.

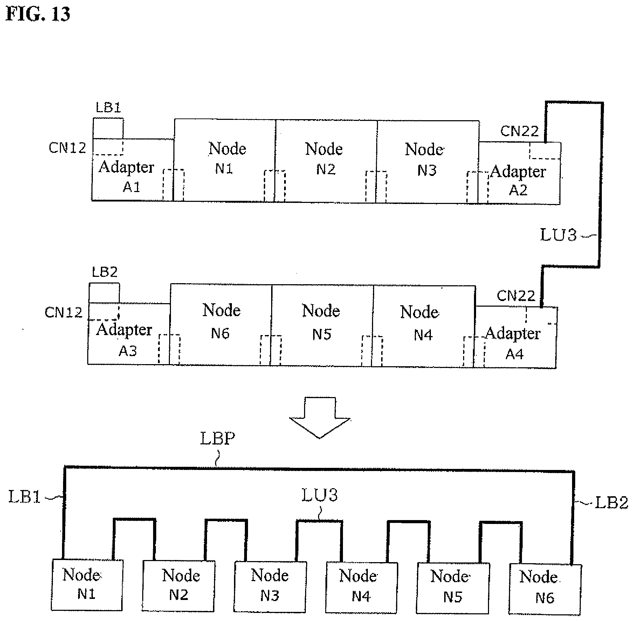

FIG. 12 is an example of connections between a line of nodes using loop-back plugs and communication cables. FIG. 13 is an example configuration of a network system based on the example of connections in FIG. 12. Here, as is illustrated in FIG. 10, of the node array comprising nodes N1, N2, and N3, which are disposed adjacently, and the node array comprising nodes N4, N5, and N6, which, similarly, are disposed adjacently, the adapter A2, which is connected to the node N3, and the adapter A4, which is connected to the node N4, are connected together through the communication cable LU3. Moreover, a loop-back communication line LB1, made from the loop-back plug 40, is connected to the cable connector CN12 of the adapter A1 that is connected to the node N1, and a loop-back communication line LB2, made from the loop-back plug 40, is connected to the cable connector CN12 of the adapter A2 that is connected to the node N6.

As a result, as illustrated in FIG. 13, multiple node arrays that are disposed in remote locations are connected through the communication cable LU3, the loop-back communication lines LB1 and LB2, and the node bypass communication lines LBP within each of the nodes N1 through N6, to structure a full-duplex Ethernet system wherein these nodes N1 through N6 are connected in a ring.

### [Effects of the Second Form of Embodiment]

In this way, in the present form of embodiment, two communication wires L11 and L12, for node by passing, are provided in each node 10 connecting the connector portion 21 and the connector portion 22 together directly through the node 10, thus making it possible to use these communication wires L11 and L12 as redundant lines for the data communication lines Lx and Ly.

Moreover, the present form of embodiment is further provided with a loop-back plug 40, connected to the cable connector CN12 of the adapter 31 or the cable connector CN22 of the adapter 32, for forming a loop-back connection of the communication wires for the cable connector data communication lines Lx and Ly and the bypass communication wires, enabling the communication wires of the data communication lines Lx and Ly to be loop-back connected to the communication wires for bypass through the loop-back plug 40. Consequently, even when to node arrays are disposed in separate locations, it is still possible to structure these nodes 10 into a ring-shaped full-duplex Ethernet system through a single communication cable.

### [Third Form of Embodiment]

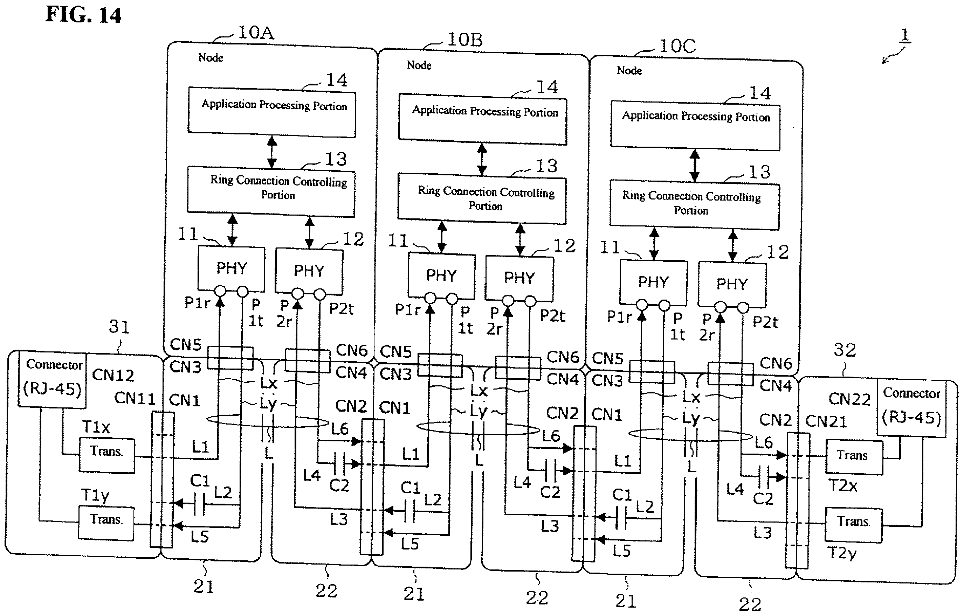

Next a network system according to a third form of embodiment according to the present invention will be explained in reference to FIG. 14. FIG. 14 is a block diagram illustrating a structure of a network system and a node according to a third form of embodiment according to the present invention.

In the first and second forms of embodiment, cases were explained as examples wherein the connector portions 21 and 22 were provided integrally as circuits with in each of the nodes 10. In the present form of embodiment a case will be explained wherein the connector portions 21 and 22 are separate from the nodes 10, and are connected to the nodes 10 as separate devices.

In FIG. 14, connectors CN5 and CN6 are equipped at a node 10, where a connector CN3 of the connector portion 21 is connected to the connector CN5, and a connector CN4 of the connector portion 22 is connected to the connector CN6. The other structures are identical to those in the first form of embodiment, and thus explanations thereof will be omitted here.

### [Effects of the Third Form of Embodiment]

In this way, in the present form of embodiment the connector portions 21 and 22 are structured as devices that are separate from the node 10, thus enabling the same effects in operation as in the first form of embodiment, without additional circuit structures in the nodes 10.

Moreover, while in the present form of embodiment a case of application to the first form of embodiment was explained as an example, this can be applied similarly to the second form of embodiment.

Moreover, while in the present form of embodiment a case wherein the connector portions 21 and 22 are each individually separate devices was explained as an example, there is no limitation thereto, but rather these two connector portions 21 and 22, corresponding to a single node 10, may be provided in a single device. This makes it possible to achieve the connectors CN5 and CN6, and the connectors CN3 and CN4, in FIG. 14, in respective single connectors. Furthermore, the two connector portions 21 and 22 corresponding to a plurality of nodes 10 may be provided in a single device. Doing so not only makes it possible to eliminate the connectors CN1 and CN2, for connecting between nodes, but also makes it possible to eliminate the communication wires L5 and L6 between the nodes, to eliminate the wires L2 and the capacitor C1 between the node 10 and the adapter 31, and further to eliminate the communication wires L4 and the capacitor C2 between the node 10 in the adapter 32.

### [Expanded Forms of Embodiment]

While the present invention was explained above in reference to forms of embodiment, the present invention is not limited by the forms of embodiment set forth above. The structures and details of the present invention may be modified in a variety of ways, as can be understood by those skilled in the art, within the scope of the present invention as defined by the appended claims.

Moreover, while in each of the forms of embodiment cases were explained as examples wherein the capacitors C1 and C2 were provided in the communication wires L2 and L4 on the transmitting port sides of the connector portions 21 and 22, there is no limitation thereto, but rather the capacitors C1 and C2 may be provided in the communication wires L1 and L3 on the receiving port sides.

### Explanation of Codes

1: Network System
10, 10A, 10B, 10C: Nodes
10L: Left-Side Terminal Portion
10R: Right-Side Terminal Portion
11, 12: Physical Layer Portions
13: Ring Connection Controlling Portion
14: Application Processing Portion
21, 22: Connector Portions
31, 32: Adapters
31R: Right-Side Terminal Portion
32L: Left-Side Terminal Portion
P1t, P2t: Transmitting Ports
P1r, P2r: Receiving Ports
CN1, CN2, CN3, CN4, CN5, CN6, CN11, CN21: Connectors
CN12, CN22: Cable Connectors
L1, L2, L3, L4, L5, L6, L7, L8, L9, L10, L11, L12, L13, L14: Communication Wires
C1, C2: Capacitors
T1x, T1y, T2x, T2y: Terminal Transformers
N1, N2, N3, N4, N5, N6: Nodes
A1, A2, A3, A4: Adapters
L, Lx, Ly, LU1, LU2, LU3: Data Communication Lines
LB1, LB2: Loop-Back Communication Lines
LBP: Communication Line (for Node Bypass)

## Claims

1. A network system (1) for connecting a plurality of nodes (10, 10A, 10B, 10C, 10D, N1, N2, N3, N4, N5, N6) through data communication lines, wherein:
each individual node comprises a first connector portion (CN1) for connecting the node electrically with a first adjacent node that is adjacent on one side of the node, and a second connector portion (CN2) for connecting the node electrically with a second adjacent node that is adjacent on the other side of the node; wherein:
the first connector portion comprises:
a first communication wire (L1) for connecting, to the first adjacent node, a receiving port of a first physical layer portion (11) of the node; and
a second communication (L2) wire for connecting, to the first adjacent node, a transmitting port of the first physical layer portion (11) of the node through a capacitive element (C1);
the second connector portion comprises:
a third communication wire (L3) for connecting, to the second adjacent node, a receiving port of a second physical layer portion (12) of the node; and
a fourth communication wire (L4) for connecting, to the second adjacent node, a transmitting port of the second physical layer portion (12) of the node through a capacitive element (C2); and
the first connector portion (CN1) connects to the second connector portion of the first adjacent node to connect to the first communication wire of the node to the fourth communication wire of the first adjacent node, and also to connect the second communication wire of the node to the third communication wire of the first adjacent node, wherein:
the first connector portion further includes a fifth communication wire (L5) for connecting the transmitting port of the first physical layer portion to the first adjacent node; and
the second connector portion further includes a sixth communication wire (L6) for connecting the transmitting port of the second physical layer portion to the second adjacent node;
the network system further comprising:
a first adapter (31, A1, A3), which includes a first cable connector (CN12) for connecting the first communication cable for structuring the data communication line, for connecting the first and fifth communication wires (L1, L5) of the node to the first cable connector by communication wires through respective individual terminating transformers (T1x, T1y), through connecting to the first connector portion of the node (10A); and
a first adapter, which includes a second cable connector (CN22) for connecting the second communication cable for structuring the data communication line, for connecting the third and sixth communication wires (L3, L6) of the node to the second cable connector by communication wires through respective individual terminating transformers (T2x, T2y), through connecting to the second connector portion of the node.

2. A network system (1) for connecting a plurality of nodes (10, 10A, 10B, 10C, 10D, N1, N2, N3, N4, N5, N6) through data communication lines, wherein:
each individual node comprises a first connector portion (CN1) for connecting the node electrically with a first adjacent node that is adjacent on one side of the node, and a second connector portion (CN2) for connecting the node electrically with a second adjacent node that is adjacent on the other side of the node; wherein:
the first connector portion comprises:
a first communication wire (L1) for connecting, to the first adjacent node, a receiving port of a first physical layer portion (11) of the node; and
a second communication (L2) wire for connecting, to the first adjacent node, a transmitting port of the first physical layer portion (11) of the node through a capacitive element (C1);
the second connector portion comprises:
a third communication wire (L3) for connecting, to the second adjacent node, a receiving port of a second physical layer portion (12) of the node; and
a fourth communication wire (L4) for connecting, to the second adjacent node, a transmitting port of the second physical layer portion (12) of the node through a capacitive element (C2); and
the first connector portion (CN1) connects to the second connector portion of the first adjacent node to connect to the first communication wire of the node to the fourth communication wire of the first adjacent node, and also to connect the second communication wire of the node to the third communication wire of the first adjacent node, wherein:
the node includes a node bypass communication wire (L11, L12), which passes through the node, for connecting the first connector portion and the second connector portion directly; and
the first connector portion connects the node bypass communication wire and the node bypass communication wire of the first adjacent node through connecting to the second connector portion of the first adjacent node.

3. A network system as set forth in Claim 2, wherein:
the first connector portion further includes a fifth communication wire (L5) for connecting the transmitting port of the first physical layer portion to the first adjacent node; and
the second connector portion further includes a sixth communication wire (L6) for connecting the transmitting port of the second physical layer portion to the second adjacent node;
further comprising:
a first adapter (31, A1, A3), which includes a first cable connector (CN12) for connecting the first communication cable for structuring the data communication line (L, Lx, Ly, LU1, LUL, LU3), for connecting the first and fifth communication wires (L1, L5) of the node to the first cable connector by communication wires through respective individual terminating transformers (T1x, T1y), and for connecting the node bypass communication wire (L11, L12) of the node to a bypass communication circuit (L13, L14) of the first cable connector, through connecting to the first connector portion of the node; and
a second adapter (32, A2, A4), which includes a second cable connector (CN22) for connecting the second communication cable for structuring the data communication line (L, Lx, Ly, LU1, LUL, LU3), for connecting the third and sixth communication wires (L3, L6) of the node to the second cable connector by communication wires through respective individual terminating transformers (T2x, T2y), and for connecting the node bypass communication wire (L11, L12) of the node to a bypass communication circuit (L15, L16) of the second cable connector, through connecting to the second connector portion of the node.

4. A network system as set forth in Claim 3, further comprising:
a loop-back plug (40) that is connected to the first cable connector of the first adapter or the second cable connector of the second adapter, for loop-back connecting a communication line for isolating the cable connector and a bypass communication wire.

5. A node (10, 10A, 10B, 10C, 10D, N1, N2, N3, N4, N5, N6) used in a network system for connecting a plurality of nodes through data communication lines, comprising:
a first connector portion (CN1) for connecting the node electrically with a first adjacent node that is adjacent on one side of the node, and a second connector portion (CN2) for connecting the node electrically with a second adjacent node that is adjacent on the other side of the node; wherein:
the first connector portion comprises:
a first communication wire (L1) for connecting, to the first adjacent node, a receiving port of a first physical layer portion (11) of the node; and
a second communication wire (L2) for connecting, to the first adjacent node, a transmitting port of the first physical layer portion (11) of the node through a capacitive element (C1);
the second connector portion comprises:
a third communication wire (L3) for connecting, to the second adjacent node, a receiving port of a second physical layer portion (12) of the node; and
a fourth communication wire (L4) for connecting, to the second adjacent node, a transmitting port of the second physical layer portion (12) of the node through a capacitive element (C2); and
the first connector portion connects to the second connector portion of the first adjacent node to connect to the first communication wire of the node to the fourth communication wire of the first adjacent node, and also to connect the second communication wire of the node to the third communication wire of the first adjacent node, wherein:
the first connector portion further includes a fifth communication wire (L5) for connecting the transmitting port of the first physical layer portion to the first adjacent node; and
the second connector portion further includes a sixth communication wire (L6) for connecting the transmitting port of the second physical layer portion to the second adjacent node;
the node further comprising:
a first adapter (31, A1, A3), which includes a first cable connector (CN12) for connecting the first communication cable for structuring the data communication line, for connecting the first and fifth communication wires (L1, L5) of the node to the first cable connector by communication wires through respective individual terminating transformers (T1x, T1y), through connecting to the first connector portion of the node (10A); and
a first adapter, which includes a second cable connector (CN22) for connecting the second communication cable for structuring the data communication line, for connecting the third and sixth communication wires (L3, L6) of the node to the second cable connector by communication wires through respective individual terminating transformers (T2x, T2y), through connecting to the second connector portion of the node.

6. A node as set forth in Claim 5, further comprising:
a node bypass communication wire (L11, L12), which passes through the node, for connecting the first connector portion (CN1) and the second connector portion (CN2) directly; wherein:
the first connector portion connects the node bypass communication wire and the node bypass communication wire of the first adjacent node through connecting to the second connector portion of the first adjacent node.

## Patentansprüche

1. Netzwerksystem (1) zum Verbinden einer Mehrzahl Knoten (10, 10A, 10B, 10C, 10D, N1, N2, N3, N4, N5, N6) über Datenkommunikationsleitungen, wobei: jeder einzelne Knoten einen ersten Verbinderabschnitt (CN1) zum elektrischen Verbinden des Knotens mit einem ersten benachbarten Knoten, der auf einer Seite des Knotens benachbart ist, und einen zweiten Verbindungsabschnitt (CN2) zum elektrischen Verbinden des Knotens mit einem zweiten benachbarten Knoten, der auf der anderen Seite des Knotens benachbart ist, umfasst, wobei:
der erste Verbinderabschnitt umfasst:
ein erstes Kommunikationskabel (L1) zum Verbinden einer Empfangsschnittstelle eines ersten Abschnitts (11) der physikalischen Schicht des Knotens mit dem ersten benachbarten Knoten und
ein zweites Kommunikationskabel (L2) zum Verbinden einer Sendeschnittstelle des ersten Abschnitts (11) der physikalischen Schicht des Knotens mit dem ersten benachbarten Knoten über ein kapazitives Element (C1);
der zweite Verbinderabschnitt umfasst:
ein drittes Kommunikationskabel (L3) zum Verbinden einer Empfangsschnittstelle eines zweiten Abschnitts (12) der physikalischen Schicht des Knotens mit dem zweiten benachbarten Knoten und
ein viertes Kommunikationskabel (L4) zum Verbinden einer Sendeschnittstelle eines zweiten Abschnitts (12) der physikalischen Schicht des Knotens mit dem zweiten benachbarten Knoten über ein kapazitives Element (C2) und
der erste Verbinderabschnitt (CN1) sich an den zweiten Verbinderabschnitt des ersten benachbarten Knotens anschließt, um das erste Kommunikationskabel des Knotens mit dem vierten Kommunikationskabel des ersten benachbarten Knotens zu verbinden, und auch um das zweite Kommunikationskabel des Knotens mit dem dritten Kommunikationskabel des ersten benachbarten Knotens zu verbinden, wobei:
der erste Verbinderabschnitt ferner ein fünftes Kommunikationskabel (L5) zum Verbinden der Sendeschnittstelle des ersten Abschnitts der physikalischen Schicht mit dem ersten benachbarten Knoten umfasst, und
der zweite Verbinderabschnitt ferner ein sechstes Kommunikationskabel (L6) zum Verbinden der Sendeschnittstelle des zweiten Abschnitts der physikalischen Schicht mit dem zweiten benachbarten Knoten umfasst,
wobei das Netzwerksystem ferner umfasst:
einen ersten Adapter (31, A1, A3), der einen ersten Kabelverbinder (CN12) zum Verbinden des ersten Kommunikationskabels, um die Datenkommunikationsleitung zu strukturieren, um das erste und fünfte Kommunikationskabel (L1, L5) des Knotens durch Kommunikationskabel über jeweilige einzelne Endtransformatoren (T1x, T1y) mit dem ersten Kabelverbinder zu verbinden, indem sie mit dem ersten Verbinderabschnitt des Knotens (10A) verbunden werden, und
einen ersten Adapter, der einen zweiten Kabelverbinder (CN22) zum Verbinden des zweiten Kommunikationskabels, um die Datenkommunikationsleitung zu strukturieren, um das dritte und sechste Kommunikationskabel (L3, L6) des Knotens durch Kommunikationskabel über jeweilige einzelne Endtransformatoren (T2x, T2y) mit dem zweiten Kabelverbinder zu verbinden, indem sie mit dem zweiten Verbinderabschnitt des Knotens verbunden werden.

2. Netzwerksystem (1) zum Verbinden einer Mehrzahl Knoten (10, 10A, 10B, 10C, 10D, N1, N2, N3, N4, N5, N6) über Datenkommunikationsleitungen, wobei: jeder einzelne Knoten einen ersten Verbinderabschnitt (CN1) zum elektrischen Verbinden des Knotens mit einem ersten benachbarten Knoten, der auf einer Seite des Knotens benachbart ist, und einen zweiten Verbindungsabschnitt (CN2) zum elektrischen Verbinden des Knotens mit einem zweiten benachbarten Knoten, der auf der anderen Seite des Knotens benachbart ist, umfasst, wobei: der erste Verbinderabschnitt umfasst:
ein erstes Kommunikationskabel (L1) zum Verbinden einer Empfangsschnittstelle eines ersten Abschnitts (11) der physikalischen Schicht des Knotens mit dem ersten benachbarten Knoten und
ein zweites Kommunikationskabel (L2) zum Verbinden einer Sendeschnittstelle des ersten Abschnitts (11) der physikalischen Schicht des Knotens mit dem ersten benachbarten Knoten über ein kapazitives Element (C1);
der zweite Verbinderabschnitt umfasst:
ein drittes Kommunikationskabel (L3) zum Verbinden einer Empfangsschnittstelle eines zweiten Abschnitts (12) der physikalischen Schicht des Knotens mit dem zweiten benachbarten Knoten und
ein viertes Kommunikationskabel (L4) zum Verbinden einer Sendeschnittstelle eines zweiten Abschnitts (12) der physikalischen Schicht des Knotens mit dem zweiten benachbarten Knoten über ein kapazitives Element (C2) und
der erste Verbinderabschnitt (CN1) sich an den zweiten Verbinderabschnitt des ersten benachbarten Knotens anschließt, um das erste Kommunikationskabel des Knotens mit dem vierten Kommunikationskabel des ersten benachbarten Knotens zu verbinden, und auch um das zweite Kommunikationskabel des Knotens mit dem dritten Kommunikationskabel des ersten benachbarten Knotens zu verbinden, wobei:
der Knoten ein Knoten-Bypass-Kommunikationskabel (L11, L12) umfasst, das den Knoten durchquert, um den ersten Verbinderabschnitt und den zweiten Verbinderabschnitt unmittelbar zu verbinden, und
der erste Verbinderabschnitt das Knoten-Bypass-Kommunikationskabel und das Knoten-Bypass-Kommunikationskabel des ersten benachbarten Knotens dadurch verbindet, das er sich an den zweiten Verbinderabschnitt des ersten benachbarten Knotens anschließt.

3. Netzwerksystem nach Anspruch 2, wobei:
der erste Verbinderabschnitt ferner ein fünftes Kommunikationskabel (L5) zum Verbinden der Sendeschnittstelle des ersten Abschnitts der physikalischen Schicht mit dem ersten benachbarten Knoten umfasst, und
der zweite Verbinderabschnitt ferner ein sechstes Kommunikationskabel (L6) zum Verbinden der Sendeschnittstelle des zweiten Abschnitts der physikalischen Schicht mit dem zweiten benachbarten Knoten umfasst,
ferner umfassend:
einen ersten Adapter (31, A1, A3), der einen ersten Kabelverbinder (CN12) zum Verbinden des ersten Kommunikationskabels umfasst, um die Datenkommunikationsleitung (L, Lx, Ly, LU1, LUL, LU3) zu strukturieren, das erste und fünfte Kommunikationskabel (L1, L5) des Knotens mit dem ersten Kabelverbinder durch Kommunikationskabel über jeweilige einzelne Endtransformatoren (T1x, T1y) zu verbinden, und um das Knoten-Bypass-Kommunikationskabel (L11, L12) des Knotens mit einem Bypass-Kommunikationskreis (L13, L14) des ersten Kabelverbinders durch eine Verbindung mit dem ersten Verbinderabschnitt des Knotens zu verbinden, und
einen zweiten Adapter (32, A2, A4), der einen zweiten Kabelverbinder (CN22) zum Verbinden des zweiten Kommunikationskabels umfasst, um die Datenkommunikationsleitung (L, Lx, Ly, LU1, LUL, LU3) zu strukturieren, das dritte und sechste Kommunikationskabel (L3, L6) des Knotens mit dem zweiten Kabelverbinder durch Kommunikationskabel über jeweilige einzelne Endtransformatoren (T2x, T2y) zu verbinden, und um das Knoten-Bypass-Kommunikationskabel (L11, L12) des Knotens mit einem Bypass-Kommunikationskreis (L15, L16) des zweiten Kabelverbinders durch eine Verbindung mit dem zweiten Verbinderabschnitt des Knotens zu verbinden.

4. Netzwerksystem nach Anspruch 3, ferner umfassend:
einen Loop-Back-Stecker (40), der mit dem ersten Kabelverbinder des ersten Adapters oder dem zweiten Kabelverbinder des zweiten Adapters verbunden ist, um eine Loop-Back-Verbindung einer Kommunikationsleitung zum Isolieren des Kabelverbinders und eines Bypass-Kommunikationskabels herzustellen.

5. In einem Netzwerksystem verwendeter Knoten (10, 10A, 10B, 10C, 10D, N1, N2, N3, N4, N5, N6) über Datenkommunikationsleitungen, umfassend:
einen ersten Verbinderabschnitt (CN1) zum elektrischen Verbinden des Knotens mit einem ersten benachbarten Knoten, der auf einer Seite des Knotens benachbart ist, und einen zweiten Verbindungsabschnitt (CN2) zum elektrischen Verbinden des Knotens mit einem zweiten benachbarten Knoten, der auf der anderen Seite des Knotens benachbart ist, wobei:
der erste Verbinderabschnitt umfasst:
ein erstes Kommunikationskabel (L1) zum Verbinden einer Empfangsschnittstelle eines ersten Abschnitts (11) der physikalischen Schicht des Knotens mit dem ersten benachbarten Knoten und
ein zweites Kommunikationskabel (L2) zum Verbinden einer Sendeschnittstelle des ersten Abschnitts (11) der physikalischen Schicht des Knotens mit dem ersten benachbarten Knoten über ein kapazitives Element (C1);
der zweite Verbinderabschnitt umfasst:
ein drittes Kommunikationskabel (L3) zum Verbinden einer Empfangsschnittstelle eines zweiten Abschnitts (12) der physikalischen Schicht des Knotens mit dem zweiten benachbarten Knoten und
ein viertes Kommunikationskabel (L4) zum Verbinden einer Sendeschnittstelle eines zweiten Abschnitts (12) der physikalischen Schicht des Knotens mit dem zweiten benachbarten Knoten über ein kapazitives Element (C2) und
der erste Verbinderabschnitt sich an den zweiten Verbinderabschnitt des ersten benachbarten Knotens anschließt, um das erste Kommunikationskabel des Knotens mit dem vierten Kommunikationskabel des ersten benachbarten Knotens zu verbinden, und auch um das zweite Kommunikationskabel des Knotens mit dem dritten Kommunikationskabel des ersten benachbarten Knotens zu verbinden, wobei:
der erste Verbinderabschnitt ferner ein fünftes Kommunikationskabel (L5) zum Verbinden der Sendeschnittstelle des ersten Abschnitts der physikalischen Schicht mit dem ersten benachbarten Knoten umfasst, und
der zweite Verbinderabschnitt ferner ein sechstes Kommunikationskabel (L6) zum Verbinden der Sendeschnittstelle des zweiten Abschnitts der physikalischen Schicht mit dem zweiten benachbarten Knoten umfasst,
der Knoten ferner umfasst:
einen ersten Adapter (31, A1, A3), der einen ersten Kabelverbinder (CN12) zum Verbinden des ersten Kommunikationskabels, um die Datenkommunikationsleitung zu strukturieren, um das erste und fünfte Kommunikationskabel (L1, L5) des Knotens durch Kommunikationskabel über jeweilige einzelne Endtransformatoren (T1x, T1y) mit dem ersten Kabelverbinder zu verbinden, indem sie mit dem ersten Verbinderabschnitt des Knotens (10A) verbunden werden, und
einen ersten Adapter, der einen zweiten Kabelverbinder (CN22) zum Verbinden des zweiten Kommunikationskabels, um die Datenkommunikationsleitung zu strukturieren, um das dritte und sechste Kommunikationskabel (L3, L6) des Knotens durch Kommunikationskabel über jeweilige einzelne Endtransformatoren (T2x, T2y) mit dem zweiten Kabelverbinder zu verbinden, indem sie mit dem zweiten Verbinderabschnitt des Knotens verbunden werden.

6. Knoten nach Anspruch 5, ferner umfassend:
ein Knoten-Bypass-Kommunikationskabel (L11, L12), der den Knoten durchquert, um den ersten Verbinderabschnitt (CN1) und den zweiten Verbinderabschnitt (CN2) unmittelbar zu verbinden, wobei:
der erste Verbinderabschnitt das Knoten-Bypass-Kommunikationskabel und das Knoten-Bypass-Kommunikationskabel des ersten benachbarten Knotens dadurch verbindet, das er sich an den zweiten Verbinderabschnitt des ersten benachbarten Knotens anschließt.

## Revendications

1. Système de réseau (1) destiné à connecter une pluralité de noeuds (10, 10A, 10B, 10C, 10D, N1, N2, N3, N4, N5, N6) à travers des lignes de communication de données, dans lequel :
chaque noeud individuel comprend une première partie de connecteur (CN1) destinée à connecter électriquement le noeud avec un premier noeud adjacent qui est adjacent sur un côté du noeud, et une seconde partie de connecteur (CN2) destinée à connecter électriquement le noeud avec un second noeud adjacent qui est adjacent sur l'autre côté du noeud ; dans lequel :
la première partie de connecteur comprend :
un premier fil de communication (L1) destiné à connecter, au premier noeud adjacent, un port de réception d'une première partie de couche physique (11) du noeud ; et
un deuxième fil de communication (L2) destiné à connecter, au premier noeud adjacent, un port de transmission de la première partie de couche physique (11) du noeud à travers un élément capacitif (C1) ;
la seconde partie de connecteur comprend :
un troisième fil de communication (L3) destiné à connecter, au second noeud adjacent, un port de réception d'une seconde partie de couche physique (12) du noeud ; et
un quatrième fil de communication (L4) destiné à connecter, au second noeud adjacent, un port de transmission de la seconde partie de couche physique (12) du noeud à travers un élément capacitif (C2) ; et
la première partie de connecteur (CN1) se connecte à la seconde partie de connecteur du premier noeud adjacent en vue de connecter le premier fil de communication du noeud au quatrième fil de communication du premier noeud adjacent, et également de connecter le deuxième fil de communication du noeud au troisième fil de communication du premier noeud adjacent, dans lequel :
la première partie de connecteur inclut en outre un cinquième fil de communication (L5) destiné à connecter le port de transmission de la première partie de couche physique au premier noeud adjacent ; et
la seconde partie de connecteur inclut en outre un sixième fil de communication (L6) destiné à connecter le port de transmission de la seconde partie de couche physique au second noeud adjacent ;
le système de réseau comprenant en outre :
un premier adaptateur (31, A1, A3), lequel inclut un premier connecteur de câble (CN12) pour connecter le premier câble de communication en vue de structurer la ligne de communication de données, pour connecter les premier et cinquième fils de communication (L1, L5) du noeud au premier connecteur de câble par des fils de communication à travers des transformateurs de terminaison individuels respectifs (T1x, T1y), à travers la connexion à la première partie de connecteur du noeud (10A) ; et
un premier adaptateur, lequel inclut un second connecteur de câble (CN22) pour connecter le second câble de communication en vue de structurer la ligne de communication de données, pour connecter les troisième et sixième fils de communication (L3, L6) du noeud au second connecteur de câble par des fils de communication à travers des transformateurs de terminaison individuels respectifs (T2x, T2y), à travers la connexion à la seconde partie de connecteur du noeud.

2. Système de réseau (1) destiné à connecter une pluralité de noeuds (10, 10A, 10B, 10C, 10D, N1, N2, N3, N4, N5, N6) à travers des lignes de communication de données, dans lequel :
chaque noeud individuel comprend une première partie de connecteur (CN1) destinée à connecter électriquement le noeud avec un premier noeud adjacent qui est adjacent sur un côté du noeud, et une seconde partie de connecteur (CN2) destinée à connecter électriquement le noeud avec un second noeud adjacent qui est adjacent sur l'autre côté du noeud ; dans lequel :
la première partie de connecteur comprend :
un premier fil de communication (L1) destiné à connecter, au premier noeud adjacent, un port de réception d'une première partie de couche physique (11) du noeud ; et
un deuxième fil de communication (L2) destiné à connecter, au premier noeud adjacent, un port de transmission de la première partie de couche physique (11) du noeud à travers un élément capacitif (C1) ;
la seconde partie de connecteur comprend :
un troisième fil de communication (L3) destiné à connecter, au second noeud adjacent, un port de réception d'une seconde partie de couche physique (12) du noeud ; et
un quatrième fil de communication (L4) destiné à connecter, au second noeud adjacent, un port de transmission de la seconde partie de couche physique (12) du noeud à travers un élément capacitif (C2) ; et
la première partie de connecteur (CN1) se connecte à la seconde partie de connecteur du premier noeud adjacent en vue de connecter le premier fil de communication du noeud au quatrième fil de communication du premier noeud adjacent, et également de connecter le deuxième fil de communication du noeud au troisième fil de communication du premier noeud adjacent, dans lequel :
le noeud inclut un fil de communication de dérivation de noeud (L11, L12), qui passe à travers le noeud, pour connecter directement la première partie de connecteur et la seconde partie de connecteur ; et
la première partie de connecteur connecte le fil de communication de dérivation de noeud et le fil de communication de dérivation de noeud du premier noeud adjacent à travers une connexion à la seconde partie de connecteur du premier noeud adjacent.

3. Système de réseau selon la revendication 2, dans lequel :
la première partie de connecteur inclut en outre un cinquième fil de communication (L5) destiné à connecter le port de transmission de la première partie de couche physique au premier noeud adjacent ; et
la seconde partie de connecteur inclut en outre un sixième fil de communication (L6) destiné à connecter le port de transmission de la seconde partie de couche physique au second noeud adjacent ;
le système comprenant en outre :
un premier adaptateur (31, A1, A3), qui inclut un premier connecteur de câble (CN12) pour connecter le premier câble de communication en vue de structurer la ligne de communication de données (L, Lx, Ly, LU1, LUL, LU3), pour connecter les premier et cinquième fils de communication (L1, L5) du noeud au premier connecteur de câble par des fils de communication à travers des transformateurs de terminaison individuels respectifs (T1x, T1y), et pour connecter le fil de communication de dérivation de noeud (L11, L12) du noeud à un circuit de communication de dérivation (L13, L14) du premier connecteur de câble, à travers une connexion à la première partie de connecteur du noeud ; et
un second adaptateur (32, A2, A4), lequel inclut un second connecteur de câble (CN22) pour connecter le second câble de communication en vue de structurer la ligne de communication de données (L, Lx, Ly, LU1, LUL, LU3), pour connecter les troisième et sixième fils de communication (L3, L6) du noeud au second connecteur de câble par des fils de communication à travers des transformateurs de terminaison individuels respectifs (T2x, T2y), et pour connecter le fil de communication de dérivation de noeud (L11, L12) du noeud à un circuit de communication de dérivation (L15, L16) du second connecteur de câble, à travers une connexion à la seconde partie de connecteur du noeud.

4. Système de réseau selon la revendication 3, comprenant en outre :
une fiche de bouclage (40) qui est connectée au premier connecteur de câble du premier adaptateur ou au second connecteur de câble du second adaptateur, pour connecter par bouclage une ligne de communication destinée à isoler le connecteur de câble et un fil de communication de dérivation.

5. Noeud (10, 10A, 10B, 10C, 10D, N1, N2, N3, N4, N5, N6) utilisé dans un système de réseau pour connecter une pluralité de noeuds à travers des lignes de communication de données, comprenant :
une première partie de connecteur (CN1) destinée à connecter électriquement le noeud avec un premier noeud adjacent qui est adjacent sur un côté du noeud, et une seconde partie de connecteur (CN2) destinée à connecter électriquement le noeud avec un second noeud adjacent qui est adjacent sur l'autre côté du noeud ; dans lequel :
la première partie de connecteur comprend :
un premier fil de communication (L1) destiné à connecter, au premier noeud adjacent, un port de réception d'une première partie de couche physique (11) du noeud ; et
un deuxième fil de communication (L2) destiné à connecter, au premier noeud adjacent, un port de transmission de la première partie de couche physique (11) du noeud à travers un élément capacitif (C1) ;
la seconde partie de connecteur comprend :
un troisième fil de communication (L3) destiné à connecter, au second noeud adjacent, un port de réception d'une seconde partie de couche physique (12) du noeud ; et
un quatrième fil de communication (L4) destiné à connecter, au second noeud adjacent, un port de transmission de la seconde partie de couche physique (12) du noeud à travers un élément capacitif (C2) ; et
la première partie de connecteur (CN1) se connecte à la seconde partie de connecteur du premier noeud adjacent en vue de connecter le premier fil de communication du noeud au quatrième fil de communication du premier noeud adjacent, et également de connecter le deuxième fil de communication du noeud au troisième fil de communication du premier noeud adjacent, dans lequel :
la première partie de connecteur inclut en outre un cinquième fil de communication (L5) destiné à connecter le port de transmission de la première partie de couche physique au premier noeud adjacent ; et
la seconde partie de connecteur inclut en outre un sixième fil de communication (L6) destiné à connecter le port de transmission de la seconde partie de couche physique au second noeud adjacent ;
le noeud comprenant en outre :
un premier adaptateur (31, A1, A3), lequel inclut un premier connecteur de câble (CN12) pour connecter le premier câble de communication en vue de structurer la ligne de communication de données, pour connecter les premier et cinquième fils de communication (L1, L5) du noeud au premier connecteur de câble par des fils de communication à travers des transformateurs de terminaison individuels respectifs (T1x, T1y), à travers la connexion à la première partie de connecteur du noeud (10A) ; et
un premier adaptateur, lequel inclut un second connecteur de câble (CN22) pour connecter le second câble de communication en vue de structurer la ligne de communication de données, pour connecter les troisième et sixième fils de communication (L3, L6) du noeud au second connecteur de câble par des fils de communication à travers des transformateurs de terminaison individuels respectifs (T2x, T2y), à travers la connexion à la seconde partie de connecteur du noeud.

6. Noeud selon la revendication 5, comprenant en outre :
un fil de communication de dérivation de noeud (L11, L12), qui traverse le noeud, pour connecter directement la première partie de connecteur (CN1) et la seconde partie de connecteur (CN2) ; dans lequel :
la première partie de connecteur connecte le fil de communication de dérivation de noeud et le fil de communication de dérivation de noeud du premier noeud adjacent à travers la connexion à la seconde partie de connecteur du premier noeud adjacent.
